# FASCICULE DE BREVET EUROPEEN

(11) **EP 2 701 943 B1**
(45) Date de publication et mention de la délivrance du brevet: **12.08.2015**
(21) Numéro de dépôt: 12717721.0
(22) Date de dépôt: 27.04.2012
(51) Int. Cl.: B60N 2/28

(54) **SIEGE AUTO POUR ENFANT, DESTINE A EQUIPER UN SIEGE DE VEHICULE**
KINDERSITZ FÜR EINEN FAHRZEUGSITZ
CHILD CAR SEAT TO BE FITTED TO A VEHICLE SEAT

(30) Priorité: 29.04.2011 FR 1153667; 25.07.2011 FR 1156752
(43) Date de publication de la demande: 05.03.2014
(73) Titulaire: Dorel France SA, 49309 Cholet Cedex (FR)
(72) Inventeur: RABEONY, Haja, F-49300 Cholet (FR)
(74) Mandataire: Vidon Brevets & Stratégie
(86) Numéro de dépôt international: PCT/EP2012/057816
(87) Numéro de publication internationale: WO 2012/146743

(56) Documents cités:
- EP-A1- 2 263 910
- WO-A1-2007/062828

## Description

### 1. Domaine de l'invention

Le domaine de l'invention est celui de la puériculture. Plus précisément, l'invention concerne les sièges auto pour enfant qui sont destinés à être installés sur les sièges passagers de véhicules, notamment automobiles. Elle concerne en particulier la sécurisation de ces sièges auto pour enfant, et notamment le maintien efficace et sûr de ceux-ci, en cas de chocs ou mouvements brusques, de façon à garantir la sécurité et le confort de l'enfant transporté.

### 2. Solution de l'art antérieur

La solidarisation des sièges auto au véhicule peut être assurée à l'aide de la ceinture de sécurité du véhicule. Une autre approche, plus fiable et évitant notamment les risques de mauvaise installation de la ceinture de sécurité, est apparue depuis quelques années, répondant à la norme dite « Isofix »®.

Ces sièges auto pour enfant comportent un système d'ancrage comprenant des pinces de fixation, en général au nombre de deux, qui viennent se solidariser sur des points d'ancrage prévus dans le véhicule, et généralement accessibles entre le dossier et l'assise du siège de ce véhicule. Un indicateur permet de vérifier que les pinces de fixation sont correctement solidarisées sur les points d'ancrage du véhicule. Les risques de mauvaise fixation de ces pinces au véhicule sont ainsi réduits.

La réglementation associée à l'Isofix® prévoit qu'un troisième élément doit être prévu sur la structure du siège ou de l'embase, pour éviter que le siège auto ne bascule en cas d'accident, de choc ou de freinage brusque. Ce troisième élément est généralement assuré soit par une jambe de force soutenant la structure en prenant appui sur le sol du véhicule soit par une sangle anti-basculement, encore appelée sangle de « top tether », solidarisant une partie supérieure de la structure du siège à un élément d'accrochage du véhicule prévu à cet effet.

Lorsqu'une sangle anti-basculement est prévue, celle-ci doit présenter une longueur minimale de 2 m, fixée par la réglementation, pour permettre une solidarisation dans tout type de véhicule.

Pour être efficace et jouer son rôle de retenue de la structure du siège en cas d'accident, cette sangle anti-basculement doit être tendue. C'est pourquoi il est prévu qu'elle soit associée à un indicateur de tension, ou de non jeu.

Dans le cas de sièges auto pouvant présenter un mouvement de rotation et/ou d'inclinaison, la sangle anti-basculement, qui doit rester tendue en fonctionnement, peut être prévue pour être solidarisée à une partie supérieure d'une extension verticale de l'embase. Ces sièges auto prévoient alors un moyen de fixation du fauteuil à l'embase empêchant son basculement lors d'un choc. Ces sièges auto ne peuvent pas être placés en position dos à la route.

On connaît par ailleurs des sièges auto comprenant une embase et qui sont inclinables et/ou rotatifs par rapport à cette embase, dont la sangle anti-basculement est solidarisée à la partie supérieure du dossier, tels que décrits par exemple dans les documents de brevet EP 1 145 899 et EP 1 145 898.

On connaît encore des sièges auto à embase, inclinables et/ou rotatifs, dont la sangle anti-basculement est constituée de trois brins.

### 3. Objectifs de l'invention

L'invention a notamment pour objectif de pallier tout ou partie de ces inconvénients de l'art antérieur.

Plus précisément, l'invention a pour objectif de fournir un siège auto plus sécurisé, et plus performant sur le plan dynamique, tout en permettant un passage aisé d'une position de transport à une position d'installation d'un enfant, et réciproquement.

Un autre objectif de certains modes de réalisation de l'invention est de fournir un siège auto pouvant être utilisé en position de transport dos à la route.

### 4. Exposé de l'invention

L'invention répond à tout ou partie de ces objectifs grâce à un siège auto pour enfant, destiné à équiper un siège de véhicule, comprenant :
- un fauteuil comportant une assise et un dossier, et
- une embase par rapport à laquelle le fauteuil est mobile en rotation entre au moins une position de transport et au moins une position d'installation d'un enfant,
le siège auto étant solidarisé au véhicule par des pinces de fixation ou par une ceinture de sécurité d'une part et une sangle anti-basculement reliant ladite embase à un point d'ancrage du véhicule d'autre part,

Selon l'invention, le siège auto comporte des moyens de liaison de longueur variable comprenant une extrémité solidaire, ou fixée, à l'embase et une autre extrémité solidaire, ou fixée, à une partie supérieure du dossier, lesdits moyens de liaison de longueur variable reliant ainsi l'embase à la partie supérieure du dossier.

Ainsi, grâce à l'invention, la sangle anti-basculement reliée à l'embase conserve une longueur fixe et tendue quelle que soit la position du fauteuil. Par ailleurs, les moyens de liaison de longueur variable permettent de déplacer, en rotation notamment, le fauteuil par rapport à l'embase.

De cette façon, il est en particulier possible de réaliser des sièges auto sûrs, permettant une installation du fauteuil face à la route ou dos à la route. La sangle anti-basculement reste montée de la même façon, sans qu'il soit nécessaire de la déplacer ou de la rallonger. La variation de distance due à la position du dossier dans l'une ou l'autre des positions est absorbée par les moyens de liaison de longueur variable.

Cette approche permet également de faire varier la longueur des moyens de liaison pour passer dans une position d'installation.

Préférentiellement, le siège auto comprend des moyens de contrôle desdits moyens de liaison autorisant ou interdisant une variation de leur longueur.

En effet, lorsque le siège auto se trouve dans une position de transport, face à la route et/ou dos à la route, et/ou en cas de choc important (accident, freinage,...) il est souhaitable que la longueur des moyens de liaison ne varie pas, de façon que le maintien du siège par rapport à l'embase soit le plus efficace possible. Les moyens de contrôle assurent ce blocage, ou verrouillage, et libèrent, ou déverrouillent, la variation de longueur, pour passer d'une position de transport à l'autre, ou d'une position de transport à une position d'installation. Une commande manuelle de déverrouillage peut être prévue, pour agir sur ces moyens de contrôle, et commander le déverrouillage. Le verrouillage peut être automatique, dès que le fauteuil est amené dans une position de transport.

La sangle anti-basculement présente par exemple une extrémité reliée à une partie supérieure d'une extension verticale de l'embase et une autre extrémité destinée à être fixée au point d'ancrage du véhicule.

Selon un mode de réalisation préférentiel mais non exclusif, les moyens de liaison comportent une sangle de liaison.

Dans ce cas, la sangle de liaison peut être guidée le long d'une extension verticale de l'embase et relier la partie supérieure du dossier à une partie basse de l'embase, la sangle de liaison comprenant une extrémité solidaire de l'embase et une autre extrémité solidaire d'une partie supérieure du dossier.

La sangle de liaison traverse par exemple au moins une ouverture formée dans une partie supérieure de l'extension verticale de l'embase.

Dans un mode de réalisation, la sangle de liaison traverse une ouverture, cette ouverture pouvant par exemple définir un arc permettant de modifier l'orientation du plan défini par la surface de la sangle de liaison au niveau de cette ouverture.

Ce type d'ouverture facilite le déplacement de la sangle de liaison dans l'ouverture, lors de la rotation du fauteuil par rapport à l'embase pour passer d'une position de transport vers une position d'installation et vice-versa.

Dans un autre mode de réalisation, la sangle de liaison traverse deux ouvertures, les ouvertures pouvant comporter des fentes formant un angle non nul entre elles. Ces deux fentes traversées par la sangle de liaison permettent de modifier l'orientation du plan défini par la surface de la sangle de liaison sur son parcours.

La sangle de liaison peut comporter une première extrémité solidaire d'un enrouleur monté sur l'embase ou sur le dossier et une deuxième extrémité fixée respectivement au dossier ou à l'embase.

Dans ce cas, les moyens de contrôle peuvent comporter des moyens de blocage de l'enrouleur, agencés pour empêcher un déroulement de sangle de liaison de l'enrouleur. Ces moyens de blocage de l'enrouleur peuvent être par exemple configurés pour être automatiquement enclenchés lorsque le siège auto est en position de transport. Cela permet de bloquer la longueur de la sangle de liaison dans la position de transport, empêchant ainsi le fauteuil de bouger relativement à l'embase.

En revanche, lorsque le siège auto quitte la position de transport pour être dirigé vers une position d'installation, les moyens de blocage peuvent être désactivés de manière à pouvoir libérer une portion de sangle de liaison précédemment enroulée, si nécessaire.

La présence de l'enrouleur peut permettre d'assister l'utilisateur dans la rotation du fauteuil pour passer d'une position d'installation à une position de transport face à la route, par exemple.

Selon une variante de mise en oeuvre, l'enrouleur peut être équipé d'un système « enrouleur-bloqueur », formant les moyens de blocage, en bloquant l'enrouleur en cas de choc, d'accélération, de freinage ou d'inclinaison supérieur à un seuil prédéterminé.

Dans un mode de réalisation, les moyens de blocage sont configurés pour bloquer l'enrouleur. Dans ce cas, les moyens de blocage peuvent comporter au moins une, notamment deux roues dentées disposées de part et d'autre de l'axe de l'enrouleur, sur cet axe et coopérant, au moins pour l'une d'entre elles, avec cet axe, et un cliquet formant verrou. Une commande de déverrouillage du cliquet, comprenant par exemple un câble, peuvent être prévus. Le cliquet coopérant avec les roues dentées empêche l'enrouleur de fonctionner, donc empêche le déroulement de la sangle enroulée dans l'enrouleur à moins que la commande de déverrouillage du cliquet ne soit activée, permettant alors le déroulement de la sangle de l'enrouleur.

Dans un autre mode de réalisation, les moyens de blocage sont configurés pour bloquer la sangle enroulée dans l'enrouleur, et ainsi l'empêcher de se dérouler. Dans ce cas, les moyens de blocage peuvent comprendre un autoserreur empêchant le déroulement de la sangle enroulée. Un bouton poussoir peut être prévu pour faire pivoter l'autoserreur et permettre alors le déroulement de la sangle. Dans ce cas, le bouton poussoir peut être actionné par exemple par plateau rotatif. En variante, l'autoserreur peut être commandé par câble et levier permettant, par leur actionnement, de faire pivoter l'autoserreur pour libérer la sangle enroulée.

Avantageusement, le siège auto comporte deux positions de transport, à savoir une position face à la route et une position dos à la route. En effet, grâce à l'invention, il est possible, contrairement à l'art antérieur décrit plus haut, de former une liaison entre la partie supérieure du dossier du fauteuil et l'embase qui permet une retenue efficace du fauteuil en cas de choc, en position de transport face à la route ou encore dos à la route, et le cas échéant sur toute l'amplitude d'inclinaison de l'assise, malgré la distance entre l'extension verticale de l'embase et le dossier.

La longueur totale de la sangle de liaison est avantageusement variable, étant maximum dans la position de transport dos à la route, minimum dans la position de transport face à la route, et intermédiaire dans la ou les positions d'installation.

La deuxième extrémité de la sangle de liaison peut être fixée au dossier par l'intermédiaire d'un élément mobile en rotation relativement au dossier selon un axe sensiblement perpendiculaire au dossier. Dans un mode de réalisation particulier, l'élément mobile en rotation comporte une demi-sphère solidaire du dossier. La présence de l'élément mobile en rotation peut être utile pour permettre le bon positionnement de la sangle de liaison en fonction de la position du fauteuil. Au cours de la rotation du fauteuil, la deuxième extrémité de la sangle peut entraîner en rotation l'élément mobile en rotation. Par exemple, la deuxième extrémité de la sangle de liaison peut être sensiblement horizontale lorsque le fauteuil est en position de transport face à la route, et pivoter pour être en position sensiblement verticale lorsque le siège est en position d'installation ou en position de transport dos à la route, par exemple.

Dans un autre mode de réalisation, la deuxième extrémité de la sangle de liaison est fixée au dossier dans une fente verticale.

L'extension verticale de l'embase comporte par exemple au moins un poteau. Un avantage d'un poteau par rapport à une extension verticale pleine peut être d'alléger le siège auto tout en assurant une rigidité suffisante de l'extension verticale. Le poteau peut former une arche constituant l'extension verticale, le haut de l'arche présentant au moins une ouverture pour le passage de la sangle de liaison.

Le siège auto peut en outre comporter au moins un guide pour le passage de la sangle de liaison. Le guide peut être configuré de telle sorte que, lors de la rotation du fauteuil, la sangle de liaison vienne automatiquement se placer dans le guide.

### 5. Liste des figures

D'autres caractéristiques et avantages de l'invention apparaîtront plus clairement à la lecture de la description suivante d'un mode de réalisation de l'invention, donné à titre d'exemple illustratif et non limitatif et du dessin annexé dans lequel :
- la figure 1 illustre de manière schématique en perspective un siège auto pour enfant conforme à l'invention, représenté en position d'installation de l'enfant,
- la figure 2 représente de manière schématique le siège auto de la figure 1 vu de dos et en position de transport,
- la figure 3 représente de manière schématique et partielle l'élément mobile en rotation du siège auto de la figure 1, le siège auto étant disposé en position d'installation,
- la figure 4 représente en vue de côté schématique et partielle l'élément mobile en rotation de la figure 3, le siège auto étant disposé en position de transport face à la route,
- la figure 5 représente de manière schématique et partielle un exemple de fixation de la sangle anti-basculement,
- la figure 6 représente de manière schématique et partielle un exemple d'extension verticale avec sangle de liaison, enrouleur et sangle anti-basculement,
- la figure 7 représente schématiquement le haut de l'extension verticale illustrée sur la figure 6,
- la figure 8 représente isolément, de manière schématique, un exemple d'enrouleur pouvant être utilisé dans le siège auto conforme à l'invention,
- la figure 9 représente isolément, de manière schématique, un autre exemple d'enrouleur pouvant être utilisé dans le siège auto conforme à l'invention,
- la figure 10 représente isolément, de manière schématique, l'enrouleur de la figure 9 commandé par d'autres moyens de blocage que ceux de la figure 9,
- la figure 11 illustre isolément, de manière schématique et partielle, le haut d'un autre exemple d'extension verticale pouvant équiper le siège auto conforme à l'invention, et
- la figure 12 représente de manière schématique et partielle un autre exemple de fixation de la sangle de liaison au dossier du siège auto conforme à l'invention.

### 6. Description détaillée d'un mode de réalisation de l'invention

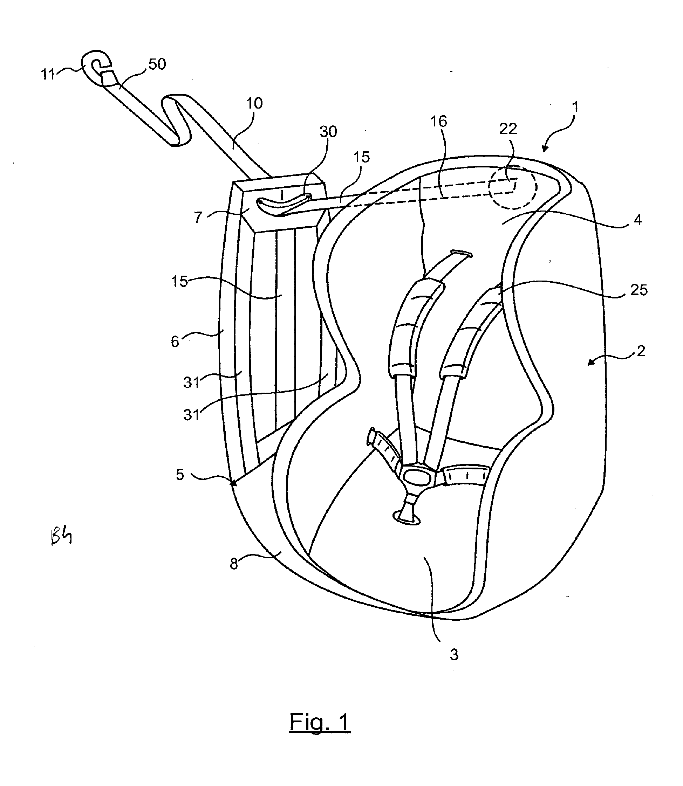

On a représenté sur la figure 1 un siège auto 1 pour enfant destiné à équiper un siège de véhicule, conforme à l'invention.

Ce siège auto 1 comporte un fauteuil 2 comprenant une assise 3 et un dossier 4. Le siège auto 1 comporte également une embase 5 destinée à être posée sur le siège du véhicule. L'embase 5 comporte une extension sensiblement verticale 6 s'étendant le long du dossier 4 du fauteuil 2. L'embase 5 comporte également une partie basse 8. Le fauteuil 2 peut comporter un harnais 25, dit à cinq points de fixation, muni dans ce mode de réalisation de fourreaux et d'une boucle de fixation, visibles sur la figure 1, de manière connue en soi.

L'extension verticale 6 de l'embase présente une partie supérieure 7. Le siège auto selon l'invention est solidarisé au véhicule par des pinces de fixation, non visibles sur les figures, de type Isofix®, et par une sangle anti-basculement 10 reliant le siège auto à un point d'ancrage du véhicule (non représenté sur la figure dans un souci de clarté du dessin). L'extrémité 50 de la sangle anti-basculement 10 qui est destinée à un point d'ancrage du véhicule est munie dans cet exemple d'un crochet 11 visible sur la figure.

Selon l'invention, la sangle anti-basculement 10 est fixée à l'embase 5, notamment, dans l'exemple illustré, à la partie supérieure 7 de l'extension verticale 6 de l'embase 5.

Le fauteuil 2 est mobile en rotation par rapport à l'embase 5 entre au moins une position de transport et au moins une position d'installation d'un enfant.

Le siège auto illustré peut occuper une position de transport face à la route et une position de transport dos à la route. Bien sûr, l'invention s'applique également aux cas de sièges auto pouvant ne prendre qu'une de ces deux positions de transport.

Sur la figure 1, le fauteuil 2 est représenté dans la position d'installation de l'enfant, à environ 90° de la position de transport dos ou face à la route, de façon qu'il se trouve face à la portière, de manière à permettre l'installation et le retrait de l'enfant de façon simple et confortable. De préférence, deux positions d'installation sont possibles, en fonction du placement du siège auto dans le véhicule, côté portière gauche ou portière droite.

Selon ce mode de réalisation de l'invention, le siège auto comporte des moyens de liaison de longueur variable reliant l'embase 5 à une partie supérieure 16 du dossier 4 du fauteuil 2, ces moyens de liaison de longueur variable comprenant une extrémité solidaire de l'embase et une autre extrémité solidaire d'une partie supérieure du dossier.

Le siège auto comprend des moyens de contrôle des moyens de liaison autorisant ou interdisant une variation de leur longueur.

Dans le mode de réalisation de l'invention, les moyens de liaison de longueur variable comportent une sangle de liaison 15 de longueur variable reliant la partie supérieure 16 du dossier 4 du fauteuil 2 et l'embase 5, notamment la partie basse 8 de l'embase 5. La sangle de liaison 15 traverse, dans cet exemple, la partie supérieure 7 de l'extension verticale 6 de l'embase 5.

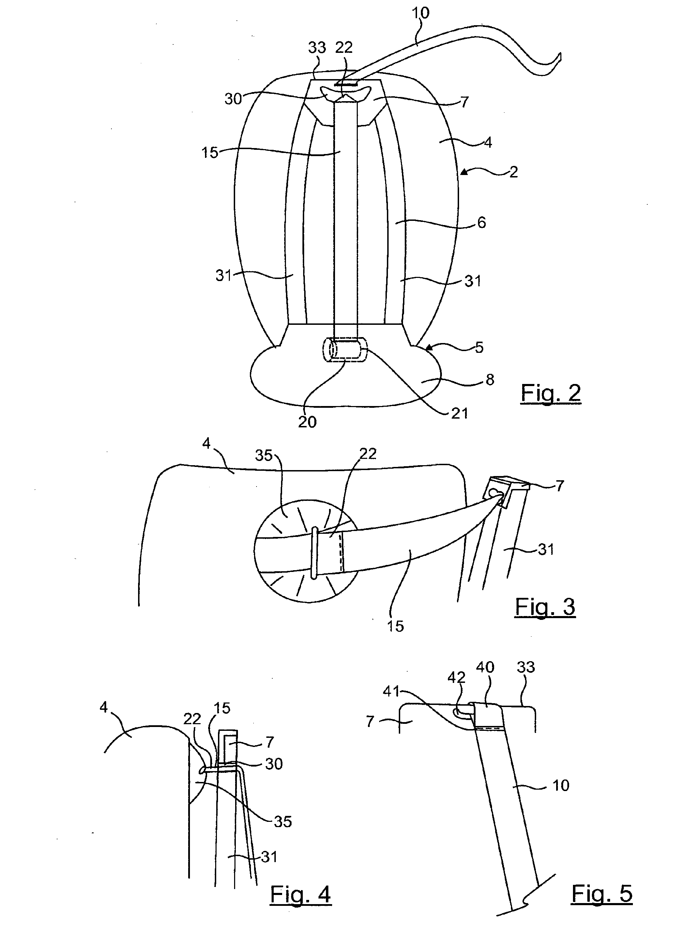

La sangle de liaison 15 comporte une première extrémité 20, visible sur la figure 2, solidaire d'un enrouleur 21 monté sur l'embase 5, dans cet exemple sur la partie basse 8 de l'embase 5. La sangle de liaison 15 comporte une deuxième extrémité 22 fixée au dossier 4, comme visible sur la figure 3 ou 4. Selon un autre mode de réalisation, l'enrouleur peut être installé dans le dossier du fauteuil. Cependant, il semble intéressant, en pratique, que l'enrouleur soit dans l'embase, qui reste fixe et à proximité de moyens permettant le déverrouillage de la liaison en rotation entre le siège et l'embase.

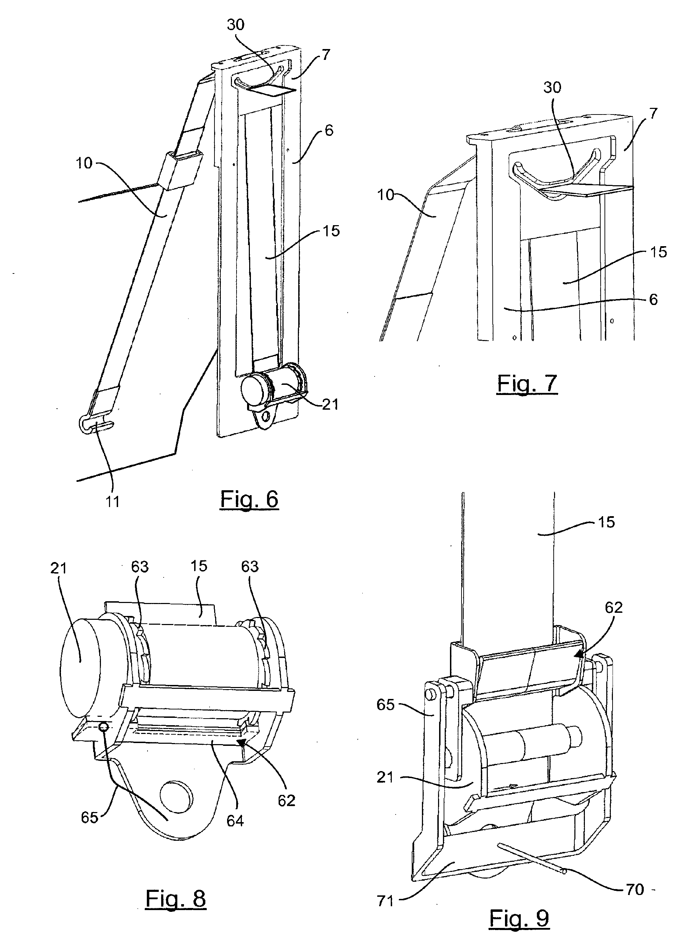

Dans l'exemple illustré, la sangle de liaison 15 traverse une ouverture 30, consistant dans cet exemple en une lumière en arc de cercle, formée dans la partie supérieure 7 de l'extension verticale 6 de l'embase 5. L'ouverture 30, dans cet exemple, présente une longueur l, suivant la courbure de l'ouverture 30 comme visible sur la figure 1, suffisante pour permettre une rotation du fauteuil sans pli ou torsion de la sangle de liaison. Un autre exemple d'ouverture 30 consistant en une lumière sensiblement en forme d'arc est visible sur les figures 6 et 7.

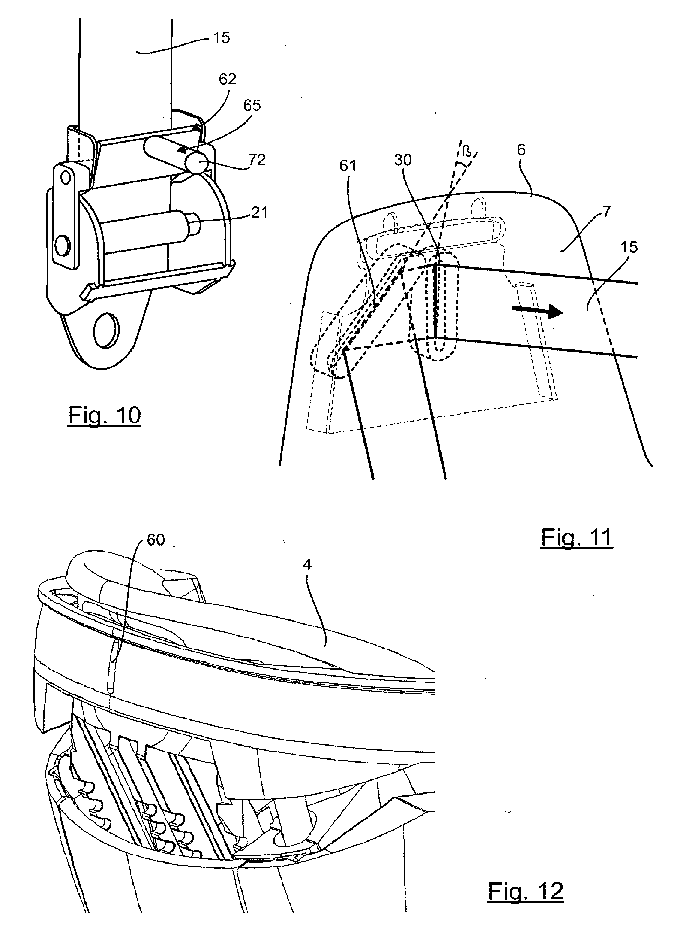

Dans un autre mode de réalisation, illustré sur la figure 11, la sangle de liaison 15 traverse deux ouvertures 30 et 61, les ouvertures 30 et 61 comportant dans cet exemple des fentes formant un angle ß non nul entre elles. En particulier, l'ouverture 30 consiste ici en une fente verticale et l'ouverture 61 consiste également en une fente dans cet exemple, cette fente formant un angle ß avec l'ouverture 30 compris environ entre 15° et 75°, comme visible sur la figure 11. La sangle de liaison 15 traverse les ouvertures 30 et 61, ce qui permet un renvoi de sangle d'un côté vers le dossier 4, depuis l'ouverture 30, d'un autre côté vers l'enrouleur 21, depuis l'ouverture 61.

Cette configuration est avantageusement définie de façon à permettre un coulissement optimisé de la sangle 15, comme par exemple, une matière adéquate, un aspect de surface et/ou un traitement de surface adaptés, des galets, des rouleaux,...

Comme visible sur les figures 1, 3 et 4, la deuxième extrémité 20 de la sangle de liaison 15 est, dans ce mode de réalisation, fixée au dossier 4 par l'intermédiaire d'un élément mobile en rotation 35 se présentant dans cet exemple sous forme d'une demi-sphère solidaire du dossier 4 et montée rotative relativement au dossier 4 selon un axe sensiblement perpendiculaire au dossier.

Ainsi, lorsque le fauteuil 2 tourne relativement à l'embase 5, la sangle de liaison 15 entraîne en rotation l'élément mobile 35. Ce dernier tourne alors relativement au dossier 4. Comme illustré sur les figures 3 et 4, l'extrémité 22 de la sangle de liaison est sensiblement horizontale lorsque le fauteuil est en position de transport face à la route (figure 4) et pivote pour être sensiblement verticale lorsque le fauteuil est amené jusqu'à une position d'installation (figure 3) ou une position de transport dos à la route.

Un autre type de fixation de la sangle de liaison 15 au dossier par l'intermédiaire d'une fente 60, et non d'un élément mobile en rotation, a été illustré sur la figure 12.

Dans l'exemple illustré, l'extension verticale 6 comprend un poteau 31 formant une arche visible sur les figures 1 et 2. Le haut de l'arche forme la partie supérieure 7 de l'extension verticale 6. Une autre structure pleine ou ajourée, par exemple comme illustré sur la figure 11, peut bien sûr être prévue, dès lors que la solidité de l'extension verticale, et en particulier de sa partie supérieure est adaptée pour assurer la sécurité de l'enfant, dans le respect des normes notamment.

Les moyens de contrôle comportent dans cet exemple des moyens de blocage 62 de l'enrouleur 21, agencés pour empêcher un déroulement de sangle de liaison de l'enrouleur. Ces moyens de blocage de l'enrouleur 21 sont automatiquement enclenchés lorsque le siège auto est en position de transport. Cela permet de bloquer la longueur de la sangle de liaison 15 dans la position de transport, empêchant ainsi le fauteuil 2 de bouger relativement à l'embase 5.

Les moyens de blocage peuvent par exemple comprendre un cliquet guidé dans le support de l'enrouleur et/ou une première roue dentée non mobile en rotation, interagissant avec une ou plusieurs roues dentées solidaires en rotation de l'enrouleur, dans un état bloqué, et se désolidarisant de cette roue dentée dans un état débloqué.

En revanche, lorsque le siège auto quitte la position de transport pour être dirigé vers une position d'installation, les moyens de blocage 62 sont désactivés de manière à pouvoir libérer une portion de sangle de liaison 15 précédemment enroulée, si nécessaire.

L'utilisateur dispose d'une commande manuelle de déverrouillage 65 permettant de désolidariser en rotation le fauteuil et l'embase, pour déplacer le fauteuil vers une position d'installation. Cette commande de déverrouillage 65 agit sur les moyens de blocage pour libérer l'enrouleur.

Le verrouillage peut notamment être obtenu en immobilisant l'enrouleur et/ou en bloquant directement la sangle. Dans les deux cas, il n'est pas possible de dérouler la sangle, qui conserve ainsi une longueur fixe, et se comporte donc comme une sangle fixe (sans enrouleur), tant que la commande de déverrouillage 65 n'a pas été activée.

Un premier mode de réalisation, dans lequel l'enrouleur 21 est équipé moyens de blocage 62 a été illustré sur la figure 8. Dans cet exemple, les moyens de blocage 62 sont configurés pour bloquer l'enrouleur 21 (c'est-à-dire pour empêcher une rotation permettant de dérouler la sangle). Ces moyens de blocage 62 comportent deux roues dentées 63, disposées de part et d'autre de la portion de sangle de liaison 15 enroulée, et un cliquet 64. Dans d'autres modes de réalisation, une unique roue dentée peut être prévue.

Le cliquet 64 en prise avec les roues dentées 63 empêche le déroulement de la sangle de liaison 15. La commande de déverrouillage 65 comprend dans cet exemple un câble relié à un bouton de commande (non illustré) et permet le désengagement du cliquet 64 afin de déverrouiller l'enrouleur 21 et de permettre sa rotation, et donc le déroulement d'une longueur nécessaire de sangle de liaison 15.

Dans le second mode de réalisation illustré sur les figures 9 et 10, les moyens de blocage 62 sont configurés pour bloquer la sangle enroulée, et l'empêcher de se dérouler. Les moyens de blocage 62 comportent un élément autoserreur venant pincer la sangle de liaison 15 contre une partie fixe dans laquelle circule la sangle, de façon à immobiliser cette dernière.

La commande de déverrouillage 65 comporte, dans l'exemple illustré sur la figure 9, un câble 70 et un levier 71, le câble 70 étant relié à des moyens d'actionnement non illustrés, pour permettre le pivotement de l'autoserreur, de façon à libérer et donc autoriser le déroulement de la sangle de liaison 15, le cas échéant.

Dans la variante illustrée sur la figure 10, la commande de déverrouillage 65 comporte un bouton poussoir 72 permettant de relâcher l'autoserreur par appui sur une portion de celui-ci, de façon à le faire pivoter pour libérer la sangle de liaison 15, si besoin.

Des moyens de rappel, non illustrés, tendent à ramener l'autoserreur dans la position de blocage, en absence d'action de l'utilisateur.

Encore un autre exemple de commande de déverrouillage 65 utilisable est décrit dans la demande de brevet FR 1153668, intitulée « Siège auto pivotant pour enfant, destiné à équiper un siège de véhicule », incorporée par référence.

Cette demande de brevet FR 1153668 présente également un mécanisme de limitation de la plage de rotation possible pour le fauteuil par rapport à l'embase, permettant notamment d'éviter que ce fauteuil fasse plusieurs tours, et donc que la sangle se déroule de façon non souhaitée, se vrille, se bloque et/ou prenne une position dangereuse pour la sécurité de l'enfant.

Dans d'autres modes de réalisation, une commande spécifique peut être prévue pour libérer l'enrouleur. Ainsi :
- lorsque le siège est dans une position de transport, l'enrouleur est bloqué, et la longueur de sangle de liaison est fixe (et minimale, si le fauteuil est face à la route, ou maximale, si le fauteuil est dos à la route). La situation est assimilable à une liaison fixe entre la partie supérieure du dossier et la partie supérieure de l'embase ;
- lorsque le siège n'est plus dans une position de transport (c'est-à-dire qu'il se trouve dans une position d'installation ou en déplacement entre une position de transport et une position d'installation), l'enrouleur est débloqué, et la sangle de liaison peut donc se dérouler ou s'enrouler.

Lorsque l'utilisateur déplace le fauteuil vers une position d'installation, la sangle de liaison se déroule donc progressivement, si le fauteuil était face à la route (et s'enroule si le fauteuil était dos à la route). Elle s'enroule (se déroule respectivement) à nouveau lorsque l'utilisateur ramène le fauteuil vers une position de transport. La présence de l'enrouleur 21 permet également d'assister l'utilisateur dans la rotation du fauteuil pour passer d'une position d'installation à une position de transport.

Selon une variante de mise en oeuvre, l'enrouleur peut être équipé d'un système « enrouleur-bloqueur » tel qu'utilisé classiquement pour les ceintures de sécurité des véhicules. Ce système bloque l'enrouleur en cas de choc, d'accélération, de freinage ou d'inclinaison supérieur à un seuil prédéterminé. Le reste du temps, la ceinture peut être déroulée ou enroulée, et le fauteuil peut être déplacé.

Lorsque le siège auto est en position de transport face à la route, la longueur de la sangle de liaison 15 est donc minimale et l'enroulement sur l'enrouleur 21 est maximal. En revanche, lorsque le fauteuil 2 est en position d'installation, comme illustré sur la figure 1, la sangle de liaison 15 est plus longue. En position de transport dos à la route, la longueur de sangle de liaison 15 est maximale.

La sangle de liaison 15 présente deux portions, une portion sensiblement verticale, s'étendant dans ou le long de l'extension verticale 6, et dont la longueur reste sensiblement inchangée, et une portion sensiblement horizontale, entre l'extrémité supérieure 33 de l'extension verticale et le dossier, dont la longueur peut varier.

Il est à noter que l'extrémité supérieure 33 de l'extension verticale 6 est formée à une hauteur sensiblement égale à celle d'une extrémité supérieure du dossier 4.

L'ouverture 30 est formée dans cet exemple à proximité de l'extrémité supérieure 33 de l'extension verticale 6.

Comme visible sur la figure 5, la sangle anti-basculement 10 peut être fixée à la partie supérieure 7 de l'extension verticale, son extrémité 40 formant un retour sur elle-même et fixée par une couture 41, le retour englobant une portion de la partie supérieure 7 de l'extension verticale 6 grâce à une ouverture complémentaire 42 formée à l'extrémité supérieure 33 de l'extension verticale 6.

Dans toute la description, les expressions « comportant un » ou « comprenant un » doivent être comprises comme étant synonymes respectivement des expressions « comportant au moins un » et « comprenant au moins un », sauf si le contraire est spécifié.

## Revendications

1. Siège auto (1) pour enfant, destiné à équiper un siège de véhicule, comprenant :
- un fauteuil (2) comportant une assise (3) et un dossier (4), et
- une embase (5) par rapport à laquelle le fauteuil (2) est mobile en rotation entre au moins une position de transport et au moins une position d'installation d'un enfant,
le siège auto étant solidarisé au véhicule par des pinces de fixation ou par une ceinture de sécurité d'une part et une sangle anti-basculement (10) reliant ladite embase (5) à un point d'ancrage du véhicule d'autre part,
**caractérisé en ce qu'**il comporte des moyens de liaison de longueur variable comprenant une extrémité solidaire de l'embase (5) et une autre extrémité solidaire d'une partie supérieure (16) du dossier, lesdits moyens de liaison de longueur variable reliant ainsi l'embase (5) à la partie supérieure (16) du dossier (4).

2. Siège auto selon la revendication 1, **caractérisé en ce qu'**il comprend des moyens de contrôle desdits moyens de liaison autorisant ou interdisant une variation de leur longueur.

3. Siège auto selon la revendication 1 ou 2, **caractérisé en ce que** les moyens de liaison comportent une sangle de liaison (15).

4. Siège auto selon la revendication 3, **caractérisé en ce que** la sangle de liaison (15) est guidée le long d'une extension verticale (6) de l'embase (5) et relie la partie supérieure (16) du dossier à une partie basse (8) de l'embase (5).

5. Siège auto selon l'une des revendications 3 et 4, **caractérisé en ce que** la sangle de liaison (15) traverse au moins une ouverture (30) formée dans une partie supérieure (7) de l'extension verticale (6) de l'embase (5).

6. Siège auto selon la revendication 5, **caractérisé en ce que** ladite ouverture (30) définit un arc permettant de modifier l'orientation du plan défini par la surface de la sangle de liaison (15) au niveau de cette ouverture (30).

7. Siège auto selon la revendication 5, **caractérisé en ce que** la sangle de liaison (15) traverse deux ouvertures (30,61) formées dans une partie supérieure (7) de l'extension verticale (6) de l'embase (5), les ouvertures (30, 61) comportant des fentes formant un angle (ß) non nul entre elles.

8. Siège auto selon l'une des revendications 3 à 7, **caractérisé en ce que** ladite sangle de liaison (15) comporte une première extrémité (20) solidaire d'un enrouleur (21) monté sur l'embase (5) ou sur le dossier (4) et une deuxième extrémité fixée respectivement au dossier (4) ou à l'embase (5).

9. Siège auto selon les revendications 2 et 8, **caractérisé en ce que** lesdits moyens de contrôle comportent des moyens de blocage de l'enrouleur (21), agencés pour empêcher un déroulement de sangle de liaison (15) de l'enrouleur (21).

10. Siège auto selon la revendication 9, **caractérisé en ce que** les moyens de blocage de l'enrouleur (21) sont configurés pour être automatiquement enclenchés lorsque le siège auto est en position de transport.

11. Siège auto selon l'une des revendications 9 et 10, **caractérisé en ce que** les moyens de blocage (62) sont configurés pour bloquer l'enrouleur (21).

12. Siège auto selon l'une des revendications 9 et 10, **caractérisé en ce que** les moyens de blocage (62) sont configurés pour bloquer la sangle au voisinage de l'enrouleur (21).

13. Siège auto selon l'une quelconque des revendications précédentes, **caractérisé en ce que** le siège auto comporte deux positions de transport, à savoir une position face à la route et une position dos à la route.

14. Siège auto selon la revendication 8, **caractérisé en ce que** la deuxième extrémité (22) de la sangle de liaison (15) est fixée au dossier (4) par l'intermédiaire d'un élément mobile en rotation (35) relativement au dossier (4) selon un axe sensiblement perpendiculaire au dossier (4).

15. Siège auto selon l'une quelconque des revendications 1 à 13, **caractérisé en ce que** la partie supérieure de l'extension verticale porte ou peut coopérer avec une extrémité de la sangle anti-basculement (10) dont l'autre extrémité est destinée à être fixée audit point d'ancrage du véhicule.

## Patentansprüche

1. Autokindersitz (1) zum Anbringen auf einen Fahrzeugsitz, der folgendes umfasst:
- einen Sessel (2) mit einer Sitzfläche (3) und einer Rücklehne (4) und,
- einen Sockelteil (5) gegenüber welchen der Sessel (2) drehbar ist, zwischen mindestens einer Transportposition und mindestens einer Position zum Einbringen eines Kindes,
wobei der Autokindersitz mit dem Fahrzeug verbunden wird, mittels Befestigungszangen oder einem Sicherheitsgurt einerseits und andererseits einem Gurt zum Sichern gegen das Kippen (10), der den besagten Sockelteil (5) mit einem Befestigungspunkt im Fahrzeug verbindet,
**dadurch gekennzeichnet, dass** er Verbindungsmittel variabler Länge aufweist, von denen jeweils ein Ende mit dem Sockelteil (5) und ein anderes Ende mit einem oberen Teil (16) der Rücklehne verbunden ist, wobei die besagten Verbindungsmittel variabler Länge somit den Sockelteil (5) mit dem oberen Teil (16) der Rücklehne (4) verbinden.

2. Autokindersitz nach Anspruch 1, **dadurch gekennzeichnet, dass** er Steuermittel der besagten Verbindungsmittel aufweist, die eine Längenvariation zulassen oder verhindern.

3. Autokindersitz nach Anspruch 1 oder 2, **dadurch gekennzeichnet, dass** die Verbindungsmittel einen Verbindungsgurt (15) umfassen.

4. Autokindersitz nach Anspruch 3, **dadurch gekennzeichnet, dass** der Verbindungsgurt (15) entlang einer senkrechten Verlängerung (6) des Sockelteils (5) geführt wird und den oberen Teil (16) der Rücklehne mit einem unteren Teil (8) des Sockelteils (5) verbindet.

5. Autokindersitz nach einem der Ansprüche 3 oder 4, **dadurch gekennzeichnet, dass** der Verbindungsgurt (15) durch mindestens eine Öffnung (30) läuft, die sich in einem oberen Teil (7) der senkrechten Verlängerung (6) des Sockelteils (5) befindet.

6. Autokindersitz nach Anspruch 5, **dadurch gekennzeichnet, dass** die besagte Öffnung (30) einen Bogen bildet, der es ermöglicht, die Richtung der Ebene zu ändern, die von der Oberfläche des Verbindungsgurtes (15) auf Höhe dieser Öffnung (30) gebildet wird.

7. Autokindersitz nach Anspruch 5, **dadurch gekennzeichnet, dass** der Verbindungsgurt (15) durch zwei Öffnungen (30, 61) verläuft, die in einem oberen Teil (7) der senkrechten Verlängerung (6) des Sockelteils (5) angebracht sind, wobei diese Öffnungen (30, 61) Schlitze aufweisen, die einen Winkel (β), der nicht null ist, zwischen ihnen bilden.

8. Autokindersitz nach einem der Ansprüche 3 bis 7, **dadurch gekennzeichnet, dass** der besagte Verbindungsgurt (15) ein erstes Ende (20), das mit einer Aufrollvorrichtung (21) verbunden ist, die auf dem Sockelteil (5) oder auf der Rücklehen (4) angebracht ist sowie ein zweites Ende, das jeweils an die Rücklehne (4) oder an den Sockelteil (5) befestigt ist, aufweist.

9. Autokindersitz nach den Ansprüchen 2 und 8, **dadurch gekennzeichnet, dass** die besagten Mittel zum Steuern über Mittel zum Sperren der Aufrollvorrichtung (21) verfügen, die so ausgebildet sind, dass sie ein Abrollen des Verbindungsgurtes (15) von der Aufrollvorrichtung (21) verhindern.

10. Autokindersitz nach Anspruch 9, **dadurch gekennzeichnet, dass** die Mittel zum Sperren der Aufrollvorrichtung (21) so ausgebildet sind, dass sie automatisch einrasten, wenn der Autokindersitz sich in der Transportposition befindet.

11. Autokindersitz nach einem der Ansprüche 9 oder 10, **dadurch gekennzeichnet, dass** die Mittel zum Sperren (62) so ausgebildet sind, dass sie die Aufrollvorrichtung (21) sperren.

12. Autokindersitz nach einem der Ansprüche 9 oder 10, **dadurch gekennzeichnet, dass** die Mittel zum Sperren (62) so ausgebildet sind, dass sie den Gurt in der Nähe der Aufrollvorrichtung (21) blockieren.

13. Autokindersitz nach einem der vorhergehenden Ansprüche, **dadurch gekennzeichnet, dass** er zwei Transportpositionen aufweist, nämlich eine Position in Fahrtrichtung und eine Position gegen die Fahrtrichtung.

14. Autokindersitz nach Anspruch 8, **dadurch gekennzeichnet, dass** das zweite Ende (22) des Verbindungsgurtes (15) an die Rücklehne (4) über ein Element (35) befestigt ist, das um eine zur Rücklehne (4) annähernd senkrecht stehenden Achse drehbar ist.

15. Autokindersitz nach einem der Ansprüche 1 bis 13, **dadurch gekennzeichnet, dass** der obere Teil der senkrechten Verlängerung ein Ende des Gurtes zum Sichern gegen das Kippen (10) trägt oder damit zusammenwirken kann, wobei das andere Ende dieses Gurtes an den Befestigungspunkt des Fahrzeuges befestigt ist.

## Claims

1. Car seat (1) for a child, intended to equip a vehicle seat, comprising:
- a chair (2) comprising a seat support (3) and a backrest (4), and
- a base (5) with respect to which the chair (2) is able to move in rotation between at least one transport position and at least one position of installation of a child,
the car seat being secured to the vehicle by fixing clamps or by a safety belt on the one hand and an anti-tilt strap (10) connecting said base (5) to an anchoring point of the vehicle on the other hand,
**characterised in that** it comprises connection means of variable length comprising an end secured to the base (5) and another end secured to the top part (16) of the backrest, said variable-length connection means thus connecting the base (5) to the top part (16) of the backrest (4).

2. Car seat according to claim 1, **characterised in that** it comprises means for controlling said connection means allowing or preventing a variation in the length thereof.

3. Car seat according to claim 1 or 2, **characterised in that** the connection means comprise a connection strap (15).

4. Car seat according to claim 3, **characterised in that** the connection strap (15) is guided along a vertical extension (6) of the base (5) and connects the top part (16) of the backrest to a bottom part (8) of the base (5).

5. Car seat according to any one of claims 3 and 4, **characterised in that** the connection strap (15) passes through at least one opening (30) formed in a top part (7) of the vertical extension (6) of the base (5).

6. Car seat according to claim 5, **characterised in that** said opening (30) defines an arc making it possible to modify the orientation of the plane defined by the surface of the connection strap (15) at this opening (30).

7. Car seat according to claim 5, **characterised in that** the connection strap (15) passes through two openings (30, 61) formed in a top part (7) of the vertical extension (6) of the base (5), the openings (30, 61) comprising slots forming a non-zero angle (β) between them.

8. Car seat according to any one of claims 3 to 7, **characterised in that** said connection strap (15) comprises a first end (20) secured to a reel (21) mounted on the base (5) or on the backrest (4) and a second end fixed respectively to the backrest (4) or to the base (5).

9. Car seat according to claims 2 and 8, **characterised in that** said control means comprise means for locking the reel (21), arranged to prevent an unwinding of the connection strap (15) from the reel (21).

10. Car seat according to claim 9, **characterised in that** the means for locking the reel (21) are configured so as to be automatically triggered when the car seat is in the transport position.

11. Car seat according to any one of claims 9 and 10, **characterised in that** the locking means (62) are configured so as to lock the reel (21).

12. Car seat according to any one of claims 9 and 10, **characterised in that** the locking means (62) are configured so as to lock the strap near the reel (21).

13. Car seat according to any one of the preceding claims, **characterised in that** the car seat comprises two transport positions, namely a facing-the-road position and a back-to-the-road position.

14. Car seat according to claim 8, **characterised in that** the second end (22) of the connection strap (15) is fixed to the backrest (4) by means of an element (35) able to move in rotation relative to the backrest (4) around an axis substantially perpendicular to the backrest (4).

15. Car seat according to any one of claims 1 to 13, **characterised in that** the top part of the vertical extension carries or can cooperate with an end of the anti-tilt strap (10), the other end of which is intended to be fixed to said anchoring point of the vehicle.
